# EUROPÄISCHE PATENTSCHRIFT

(11) **EP 2 498 975 B1**
(45) Veröffentlichungstag und Bekanntmachung des Hinweises auf die Patenterteilung: **28.08.2013**
(21) Anmeldenummer: 10771764.7
(22) Anmeldetag: 02.11.2010
(51) Int. Cl.: B29C 55/06

(54) **VORRICHTUNG UND VERFAHREN ZUM LÄNGSRECKEN EINER FOLIENBAHN**
DEVICE AND METHOD FOR THE LONGITUDINAL STRETCHING OF A FILM WEB
DISPOSITIF ET PROCÉDÉ POUR L'ÉTIRAGE LONGITUDINAL D'UNE BANDE DE FILM

(30) Priorität: 10.11.2009 DE 102009046592
(43) Veröffentlichungstag der Anmeldung: 19.09.2012
(73) Patentinhaber: Windmöller & Hölscher KG, 49525 Lengerich (DE)
(72) Erfinder: TROMMELEN, Bartholomeus, 48599 Gronau (DE); LINKIES, Jürgen, 49536 Lienen (DE); NIEBRÜGGE, Thomas, 49196 Bad Laer (DE)
(86) Internationale Anmeldenummer: PCT/EP2010/066649
(87) Internationale Veröffentlichungsnummer: WO 2011/057920

(56) Entgegenhaltungen:
- WO-A1-2005/113217
- WO-A1-2006/067065
- WO-A1-2006/067066
- US-A1- 2005 077 652

## Beschreibung

Die Erfindung betrifft eine Vorrichtung zum Längsrecken einer Folienbahn nach Anspruch 1 sowie ein entsprechendes Verfahren nach Anspruch 7.

Mit dem Recken von thermoplastischen Folien können deren Eigenschaften gezielt verändert werden. Solche Eigenschaften sind beispielsweise die Transparenz oder die Festigkeit. Ein solches Recken, das in Quer- und/oder Längsrichtung der Folienbahn erfolgen kann, kann direkt nach dem Extrusionsprozess inline erfolgen. Die extrudierte Folie kann aber auch zunächst aufgewickelt und der Vorrichtung zum Längsrecken nach einer erneuten Abwicklung zugeführt werden ("Offline-Verarbeitung").

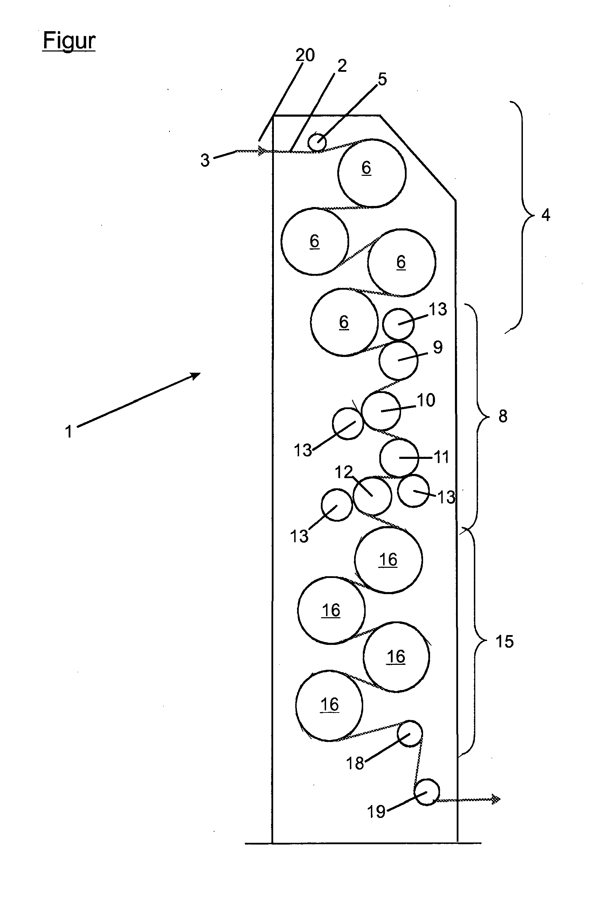

Die Druckschrift WO 2006/063641 A1 zeigt in ihrer Figur 1 eine solche, in dem Fall mehrstufige, Vorrichtung zum Längsrecken einer Folienbahn. Oft enthält eine solche Vorrichtung:
- wenigstens eine Heizwalze, mit welcher die Folienbahn aufheizbar ist,
- wenigstens eine Abkühlwalze, mit welcher die Folienbahn wieder abkühlbar, und
- wenigstens ein Reckwerk, in welcher die Folienbahn in ihrer Längsrichtung reckbar ist, wobei das Reckwerk eine erste Transportwalze, welche im Reckbetrieb eine erste Umfangsgeschwindigkeit aufweist und eine, entlang des Transportpfades der Folienbahn gesehen, der ersten Transportwalze folgende zweite Transportwalze mit einer zweiten Umfangsgeschwindigkeit umfasst, wobei die zweite Umfangsgeschwindigkeit größer ist als die erste Transportgeschwindigkeit.

In der Regel umfassen solche Reckwerke auch noch Annealing- oder Temperwalzen, die zwischen dem Reckwerk und den Kühlwalzen positioniert sind. Diese Walzen besitzen oft bereits eine niedrigere Temperatur als die Heizwalzen, sind jedoch derart temperiert, dass sie ein zu schnelles Abkühlen der Folie vermeiden.
Der Unterschied zwischen Kühlwalzen und Annealingwalzen wird oft gemacht, weil die Annealingwalzen von heißem Öl und die Kühlwalzen von Wasser durchströmt werden.

Es ist eine Tatsache, dass der Großteil des eigentlichen Reckprozesses in den Reckwerken zwischen den eigentlichen Reckwalzen vorgenommen wird. In den Reckwerken kann es zu einer Ausweitung der Länge der Folie um ganzzahlige Faktoren kommen.
Jedoch werden auch Walzen, die den oder die Reckspalte der Längsreckvorrichtung nicht begrenzen, mit einer unterschiedlichen Umfangsgeschwindigkeit betrieben, die dafür sorgt, dass eine gewisse Bahnspannung zwischen den verschiedenen Walzen aufrechterhalten wird, die der Bildung von Falzen entgegenwirkt. Falten führen zu Schäden an der Folie.

Trotz all dieser Maßnahmen hat sich gezeigt, dass das Längsverrecken von Folienbahnen in den beschriebenen Vorrichtungen neben den erwünschten Effekten auf die Transparenz und Festigkeit der Folie auch zu Schäden führt. Daher besteht die Aufgabe der vorliegenden Erfindung darin, diese Schäden zu begrenzen.

Aus der Druckschrift US 2005/077652 A1 ist eine Vorrichtung zum Längsrecken von Folienbahnen bekannt, welche mehrere Walzen umfasst, von denen ein Teil Temperierwalzen sind und ein Teil Reckspalte bildet, in denen die Folienbahn reckbar ist.

Die Aufgabe wird gelöst, indem einem gattungsgemäßen Reckwerk zumindest eine Walze zugefügt wird, die drehzahlgeregelt ist.

Wie bereits erwähnt, verfügt ein gattungsgemäßes Reckwerk über eine Mehrzahl von Walzen. Ein Teil dieser Walzen hat die Aufgabe, die Folie auf eine geeignete Recktemperatur zu bringen, bevor sie gereckt wird. Nach dem Reckprozess wird die Folienbahn sukzessive wieder auf eine niedrigere Temperatur gebracht. Oft sind dem Reckwerk Annealing- oder Temperwalzen nachgelagert, die wärmer sind als die Umgebung und die Folienbahn noch weiter auf einer gewissen Temperatur halten. Auf diese Weise sollen dem eigentlichen Reckprozess nachgelagerte Kristallisationsprozesse befördert und Schäden an der Folie, die durch zu schnelles Abkühlen entstehen, verhindert werden. Oft werden daher die Annealing- oder Temperwalzen, wie zum Teil auch die Heizwalzen, mit einer speziellen Heizflüssigkeit wie Öl geheizt.

Oft wird die Folie am Ende des Prozesses durch Kühlwalzen, die oft von Wasser durchströmt sind, gekühlt. In der vorliegenden Druckschrift wird von den Heiz-, Annealing und Kühlwalzen unter dem Oberbegriff Temperierwalzen gesprochen. Es ist möglich, auch den eigentlichen Reckprozess unter Verwendung zumindest einer Temperierwalze durchzuführen. Oft sind die Walzen, die das Reckwerk bilden, jedoch ebenfalls nicht temperiert. Neben den Temperier- und Reckwalzen weist ein Reckwerk jedoch oft auch Andrückwalzen und Leitwalzen auf.

Ein Teil der Walzen ist angetrieben. Dank der sprunghaften Entwicklung der Antriebstechnik in den letzten Jahrzehnten wird oft einer Walze auch ein Antrieb zugeordnet. Mit dem Wort Antrieb ist hier der Drehmomentsteller, also in der Regel eine Elektromaschine, gemeint. Mit Antriebsvorrichtung ist die Funktionseinheit aus Elektromaschine und Frequenzumrichter gemeint.

Die vorliegende Erfindung macht sich die Erkenntnis zunutze, dass ein Teil der an der Folienbahn auftretenden Schäden durch die hohe Bahnspannung entstehen. Zunächst überraschend ist in diesem Zusammenhang, dass die Schäden noch nicht einmal ausschließlich in dem Reckwerk, sondern auch zwischen den vor- und nachgelagerten Temperierwalzen entstehen. Hier ist die Folie noch nicht oder nicht mehr auf der richtigen Recktemperatur, wird aber noch immer durch die zur Aufrechterhaltung der Bahnspannung notwendigen Kräfte gedehnt. Daher sind die erfindungsgemäßen Maßnahmen in den Reckwerken zwar vorteilhaft, in der Regel aber außerhalb derselben noch empfehlenswerter.
Man kann zunächst einer jeden Walze, die mit einer Drehzahlregelung ausgestattet ist, eine Mindestgeschwindigkeit vorgeben. In der Regel wird man hier eine "Voreilung" einstellen (z. B. 10 % schneller als die in Bahnlaufrichtung vorgelagerte Walze). Auch die Vorgabe absoluter Werte (z. B. zur Umfangsgeschwindigkeit) ist denkbar. Die Drehmomentregelung kann dann das maximal aufzubringende Drehmoment begrenzen. Diese Größe kann in Abhängigkeit von der zu reckenden Folie eingegeben werden.

Es ist vorteilhaft, wenn die Anzeigevorrichtung mechanische Werte, die die Bahnspannung betreffen, anzeigt. An einfachsten ist hier die Anzeige der Drehmomentwerte zum Beispiel in Newtonmetern. Natürlich können auch abgeleitete Werte wie Kraft auf die Folie angezeigt werden.

Beim Betrieb der Reckvorrichtung ist es von Vorteil, wenn mehrere Walzen drehzahlgeregelt betrieben werden. Es könnten sogar alle direkt angetriebenen Walzen auf diese Weise betrieben werden. In der Regel wird man aber in den Reckwerken Geschwindigkeitsverhältnisse zwischen den Walzen vorgeben, damit die Folie die erwünschten Eigenschaften auch erzielt.
Insbesondere dann, wenn mehrere Walzen drehmomentgeregelt betrieben werden, ist es vorteilhaft, nach einer ersten Zeitspanne auf die Drehmomentregelung zu verzichten und z. B. bei einer gewissen Anzahl von Walzen die Regelung nach der Walzengeschwindigkeit oder der Relativgeschwindigkeit bestimmter Walzen vorzunehmen. Auf diese Weise können Betriebsparameter, die in der ersten Zeitspanne einen zu hohen Krafteintrag auf die Folie verhindert haben, quasi eingefroren, also während einer zweiten Zeitspanne länger fortgeführt werden. In der zweiten Zeitspanne wird auf diese Weise ein weitgehend optimierter Betrieb der Reckvorrichtung ermöglicht, der nicht von störenden Regelungsprozessen aufgrund von Regelungsvorgängen an den in Bahnlaufrichtung vorderen Walzen gestört oder verlangsamt wird.

Von besonderem Vorteil ist es, wenn die Drehmomentregelung der Walzen bereits zu Beginn des Betriebs der Reckvorrichtung beginnt. In diesem Fall lässt sich die für eine schadensfreie Produktion wichtige optimierte Bahnspannung zwischen den einzelnen Walzen oder Walzenspalten zeitnah einstellen.

Es ist von großem Vorteil, wenn verschiedene in dieser Druckschrift vorgestellte Verfahren von der Steuervorrichtung der Längsreckvorrichtung automatisiert ausgeführt werden. Hierzu kann die Steuervorrichtung entsprechend eingestellt werden. Diese Einstellung kann durch eine Programmierung vorgenommen werden. Diese Programmierung kann auch unter Verwendung von Datenträgern oder moderner Datenübermittlungsmethoden wie E-Mail, Chatting oder Fernwartungsmethoden vorgenommen werden.

Weitere Ausführungsbeispiele der Erfindung gehen aus der gegenständlichen Beschreibung und den Ansprüchen hervor.

Die Figur zeigt den schematischen Aufbau einer gattungsgemäßen Vorrichtung.

Die Figur zeigt eine Vorrichtung 1 zum Längsrecken einer Folienbahn 2, die entlang eines Transportpfades in der Transportrichtung 3 geführt wird. Die Folienbahn 2 wird von einer Extrusionseinrichtung oder einer Abwickelvorrichtung zugeführt. Zunächst passiert die Folienbahn 2 eine Leitwalze 5, bevor sie in der Heizeinrichtung 4 nacheinander über vier Heizwalzen 6, die temperierbar sind, läuft.

Nachdem die Folienbahn 2 auf diese Weise auf oder oberhalb der Plastifizierungstemperatur aufgeheizt wurde, wird sie in das Reckwerk 8 eingeführt. Das Reckwerk 8 umfasst Transportwalzen 9, 10, 11, 12, wobei die Walzenpaare 9 und 10 und die Walzenpaare 11 und 12 jeweils einen so genannten Reckspalt ausbilden. Die Walzen 10 und 12 haben dabei jeweils eine größere Umfangsgeschwindigkeit als die ihnen zugeordneten Walzen 9 und 11. Die Walzen 10 und 11 können allerdings dieselbe Umfangsgeschwindigkeit aufweisen. Jeder der vier genannten Transportwalzen ist eine Andrückwalze 13 zugeordnet, welche jeweils dafür Sorge trägt, dass die Folienbahn 2 fest auf den Transportwalzen aufliegt und nicht durchrutscht.

In der Abkühleinrichtung 15 wird die Folienbahn 2 über die Abkühlwalzen 16 geführt. In dem in Bahnlaufrichtung vorderen Teil der Abkühleinrichtung 15 können auch weitere Walzen, die so genannten Annealingwalzen, vorgesehen sein, die bereits eingangs beschrieben wurden, die hier aber nicht dargestellt sind.

Nachdem die Folienbahn 2 zwei weitere Leitwalzen 18 und 19 passiert hat, kann sie einer Wickelvorrichtung oder einer beliebigen Weiterverarbeitungseinrichtung zugeführt werden. Auf die Darstellung von Steuervorrichtungen, Kabeln, Motoren und Frequenzumrichtern wurde verzichtet.

| **Bezugszeichenliste** | |
|---|---|
| 1 | Vorrichtung zum Längsrecken einer Folienbahn 2 |
| 2 | Folienbahn |
| 3 | Transportrichtung |
| 4 | Heizeinrichtung |
| 5 | Leitwalze |
| 6 | Heizwalze |
| 7 | |
| 8 | Reckwerk |
| 9 | Transportwalze |
| 10 | Transportwalze |
| 11 | Transportwalze |
| 12 | Transportwalze |
| 13 | Andrückwalze |
| 14 | |
| 15 | Abkühleinrichtung |
| 16 | Abkühlwalze |
| 17 | |
| 18 | Leitwalze |
| 19 | Leitwalze |
| 20 | Pfeil in Bewegungsrichtung der Bahn 3 |

## Patentansprüche

1. Vorrichtung (1) zum Längsrecken von Folienbahnen (2),
- welche mehrere Walzen (5, 6, 9, 10, 11, 12, 13, 18, 19) umfasst,
- von denen ein Teil Temperierwalzen sind,
- und ein Teil (9 - 13) Reckspalte (22) bildet, in denen die Folienbahn (2) reckbar ist,
**dadurch gekennzeichnet dass**
zumindest eine der Walzen (5, 6, 9, 10, 11, 12, 13, 18, 19) über einen Antrieb verfügt, der drehmomentgeregelt ist.

2. Vorrichtung (1) nach Anspruch 1,
**dadurch gekennzeichnet, dass**
die zumindest eine Walze (A) über eine Antriebsvorrichtung verfügt, bei der der Drehmoment bildende Strom, der dem Motor der zumindest einen Walze (5, 6, 9, 10, 11, 12, 13, 18, 19) zugeführt wird, messbar ist.

3. Vorrichtung (1) nach einem der vorstehenden Ansprüche,
**dadurch gekennzeichnet, dass**
die zumindest eine Walze (5, 6, 9, 10, 11, 12, 13, 18, 19) eine Kühlwalze (16) und/oder Annealingwalze und/oder Heizwalze (6) ist.

4. Vorrichtung (1) nach einem der vorstehenden Ansprüche,
**gekennzeichnet durch**
eine Steuervorrichtung, mit welcher der zumindest einen Walze (5, 6, 9, 10, 11, 12, 13, 18, 19) eine Mindestgeschwindigkeit vorgebbar ist.

5. Vorrichtung (1) nach dem vorstehenden Anspruch,
**dadurch gekennzeichnet, dass**
die Mindestgeschwindigkeit der zumindest einen Walze in Abhängigkeit von der Geschwindigkeit einer anderen Walze (5, 6, 9, 10, 11, 12, 13, 18, 19) einstellbar ist.

6. Vorrichtung (1) nach einem der vorstehenden Ansprüche,
**gekennzeichnet durch**
eine Steuervorrichtung, welche derart eingerichtet ist, dass sie die Anzeigevorrichtung zur Anzeige mechanischer Werte, die den Bahnzug betreffen, ansteuert.

7. Verfahren zum Längsverstrecken einer Folienbahn (2),
- bei dem die Folienbahn (2) an mehreren Walzen (5, 6, 9, 10, 11, 12, 13, 18, 19) vorbeigeführt wird,
- wobei zumindest ein Teil (6, 16) der Walzen (5, 6, 9, 10, 11, 12, 13, 18, 19) die Folienbahn (2) temperiert,
- und die Folienbahn (2) in zumindest einem Recksspalt (22) durch eine unterschiedliche Umfangsgeschwindigkeit der das Reckspalt begrenzenden Walzen (9, 10, 11, 12) gereckt wird,
**dadurch gekennzeichnet, dass**
die Drehbewegung zumindest einer der Walzen (5, 6, 9, 10, 11, 12, 13, 18, 19) drehmomentgeregelt ist.

8. Verfahren nach dem vorstehenden Anspruch,
**dadurch gekennzeichnet, dass**
die Bewegung mehrerer Walzen (5, 6, 9, 10, 11, 12, 13, 18, 19) drehmomentgeregelt ist.

9. Verfahren nach einem der vorstehenden Ansprüche,
**dadurch gekennzeichnet, dass**
bei der Regelung der Drehgeschwindigkeit der Walze (5, 6, 9, 10, 11, 12, 13, 18, 19) eine Mindestgeschwindigkeit vorgegeben wird, das zur Erreichung der Mindestgeschwindigkeit maximal abrufbare Drehmoment jedoch durch die Drehmomentregelung begrenzt wird.

10. Verfahren nach einem der vorstehenden Ansprüche,
**dadurch gekennzeichnet, dass**
- die zumindest eine Walze (5, 6, 9, 10, 11, 12, 13, 18, 19) während einer ersten Zeitspanne drehmomentgeregelt betrieben
- und nach Ablauf der ersten Zeitspanne auf die Drehmomentregelung verzichtet wird.

11. Verfahren nach einem der vorstehenden Ansprüche,
**dadurch gekennzeichnet, dass**
die Walze (5, 6, 9, 10, 11, 12, 13, 18, 19) während der zweiten Zeitspanne in Abhängigkeit von der Geschwindigkeit der ihr in Bahnlaufrichtung vorgelagerten Walze betrieben wird.

12. Verfahren nach einem der vorstehenden Ansprüche,
**dadurch gekennzeichnet, dass**
die zumindest eine Walze (5, 6, 9, 10, 11, 12, 13, 18, 19) während eines Zeitraums, in dem der Längsverstreckungsprozess beginnt, drehmomentgeregelt wird.

## Claims

1. Device (1) for the longitudinal stretching of a film web (2),
- which comprises a plurality of rollers (5, 6, 9, 10, 11, 12, 13, 18, 19),
- some of which are thermocontrol rollers,
- and some (9-13) form stretching gaps (22), in which the film web (2) can be stretched,
**characterized in that**
at least one of the rollers (5, 6, 9, 10, 11, 12, 13, 18, 19) has a drive which is torque-regulated.

2. Device (1) according to Claim 1, **characterized in that** the at least one roller (A) has a drive device, in which the current which forms torque which is fed to the motor of the at least one roller (5, 6, 9, 10, 11, 12, 13, 18, 19), is measurable.

3. Device (1) according to one of the preceding claims, **characterized in that** the at least one roller (5, 6, 9, 10, 11, 12, 13, 18, 19) is a cooling roller (16) and/or annealing roller and/or heating roller (6).

4. Device (1) according to one of the preceding claims, **characterized by** a control device, by means of which a minimum speed can be stipulated for the at least one roller (5, 6, 9, 10, 11, 12, 13, 18, 19).

5. Device (1) according to the preceding claim, **characterized in that** the minimum speed of the at least one roller can be set as a function of the speed of another roller (5, 6, 9, 10, 11, 12, 13, 18, 19).

6. Device (1) according to one of the preceding claims, **characterized by** a control device which is set up in such a way that it activates the indicator device for indicating mechanical values which relate to the web tension.

7. Method for the longitudinal stretching of a film web (2),
- in which the film web (2) is led past a plurality of rollers (5, 6, 9, 10, 11, 12, 13, 18, 19),
- at least some (6, 16) of the rollers (5, 6, 9, 10, 11, 12, 13, 18, 19) thermally control the film web (2),
- and the film web (2) is stretched in at least one stretching gap (22) by means of a different circumferential speed of the rollers (9, 10, 11, 12) delimiting the stretching gap,
**characterized in that**
the rotational movement of at least one of the rollers (5, 6, 9, 10, 11, 12, 13, 18, 19) is torque-regulated.

8. Method according to the preceding claims, **characterized in that** the movement of a plurality of rollers (5, 6, 9, 10, 11, 12, 13, 18, 19) is torque-regulated.

9. Method according to one of the preceding claims, **characterized in that,** in the regulation of the rotational speed of the roller (5, 6, 9, 10, 11, 12, 13, 18, 19), a minimum speed is stipulated, but the maximum torque capable of being called up to achieve the minimum speed is limited by torque regulation.

10. Method according to one of the preceding claims, **characterized in that**
- the at least one roller (5, 6, 9, 10, 11, 12, 13, 18, 19) is operated, torque-regulated, during a first time span,
- and, after the first time span has elapsed, torque regulation is dispensed with.

11. Method according to one of the preceding claims, **characterized in that,** during the second time span, the roller (5, 6, 9, 10, 11, 12, 13, 18, 19) is operated as a function of the speed of the roller preceding it in the web running direction.

12. Method according to one of the preceding claims, **characterized in that** the at least one roller (5, 6, 9, 10, 11, 12, 13, 18, 19) is torque-regulated during a period of time in which the longitudinal stretching process commences.

## Revendications

1. Dispositif (1) pour l'étirage longitudinal de bandes de film (2),
- comprenant plusieurs rouleaux (5, 6, 9, 10, 11, 12, 13, 18, 19),
- dont une partie sont des rouleaux de thermorégulation,
- et dont une partie (9 - 13) forme des interstices d'étirage (22), dans lesquels la bande de film (2) peut être étirée,
**caractérisé en ce**
**qu'**au moins l'un des rouleaux (5, 6, 9, 10, 11, 12, 13, 18, 19) dispose d'un entraînement dont le couple est régulé.

2. Dispositif (1) selon la revendication 1,
**caractérisé en ce**
**qu'**au moins un rouleau (A) dispose d'un dispositif d'entraînement, le courant créant le couple et pouvant être acheminé au moteur de l'au moins un rouleau (5, 6, 9, 10, 11, 12, 13, 18, 19) pouvant être mesuré.

3. Dispositif (1) selon l'une quelconque des revendications précédentes,
**caractérisé en ce que**
l'au moins un rouleau (5, 6, 9, 10, 11, 12, 13, 18, 19) est un rouleau de refroidissement (16) et/ou un rouleau de recuit et/ou un rouleau chauffant (6).

4. Dispositif (1) selon l'une quelconque des revendications précédentes,
**caractérisé par**
un dispositif de commande avec lequel l'au moins un rouleau (5, 6, 9, 10, 11, 12, 13, 18, 19) peut être affecté d'une vitesse minimale.

5. Dispositif (1) selon la revendication précédente,
**caractérisé en ce que**
la vitesse minimale de l'au moins un rouleau peut être ajustée en fonction de la vitesse d'un autre rouleau (5, 6, 9, 10, 11, 12, 13, 18, 19).

6. Dispositif (1) selon l'une quelconque des revendications précédentes,
**caractérisé par**
un dispositif de commande qui est prévu pour commander le dispositif d'affichage pour afficher des valeurs mécaniques qui concernent la traction de la bande.

7. Procédé d'étirage longitudinal d'une bande de film (2),
- dans lequel la bande de film (2) est guidée devant plusieurs rouleaux (5, 6, 9, 10, 11, 12, 13, 18, 19),
- au moins une partie (6, 16) des rouleaux (5, 6, 9, 10, 11, 12, 13, 18, 19) effectuant une thermorégulation de la bande de film (2),
- et la bande de film (2) étant étirée dans au moins un interstice d'étirage (22) par une vitesse périphérique différente des rouleaux (9, 10, 11, 12) limitant l'interstice d'étirage,
**caractérisé en ce que**
le couple du mouvement de rotation d'au moins l'un des rouleaux (5, 6, 9, 10, 11, 12, 13, 18, 19) est régulé.

8. Procédé selon la revendication précédente,
**caractérisé en ce que**
le couple du mouvement de plusieurs rouleaux (5, 6, 9, 10, 11, 12, 13, 18, 19) est régulé.

9. Procédé selon l'une quelconque des revendications précédentes,
**caractérisé en ce que**
lors de la régulation de la vitesse de rotation du rouleau (5, 6, 9, 10, 11, 12, 13, 18, 19), une vitesse minimale est prédéfinie, mais le couple maximal pouvant être appelé pour atteindre la vitesse minimale est limité par la régulation de couple.

10. Procédé selon l'une quelconque des revendications précédentes,
**caractérisé en ce que**
- l'au moins un rouleau (5, 6, 9, 10, 11, 12, 13, 18, 19) est entraîné pendant une première période de temps avec une régulation de couple,
- et après l'écoulement de la première période de temps, la régulation de couple est supprimée.

11. Procédé selon l'une quelconque des revendications précédentes,
**caractérisé en ce que**
le rouleau (5, 6, 9, 10, 11, 12, 13, 18, 19) est entraîné pendant la deuxième période de temps en fonction de la vitesse du rouleau monté devant lui dans la direction d'avance de la bande.

12. Procédé selon l'une quelconque des revendications précédentes,
**caractérisé en ce que**
le couple d'au moins un rouleau (5, 6, 9, 10, 11, 12, 13, 18, 19) est régulé pendant un inter'v'alle de temps dans lequel le processus d'étirage longitudinal commence.
